# EUROPEAN PATENT SPECIFICATION

(11) **EP 3 848 894 B1**
(45) Date of publication and mention of the grant of the patent: **06.03.2024**
(21) Application number: 21150764.5
(22) Date of filing: 08.01.2021
(51) Int. Cl.: G06T 7/11

(54) **METHOD AND DEVICE FOR SEGMENTING IMAGE, AND STORAGE MEDIUM**
VERFAHREN UND VORRICHTUNG ZUR SEGMENTIERUNG EINES BILDES UND SPEICHERMEDIUM
PROCÉDÉ ET DISPOSITIF DE SEGMENTATION D'IMAGES ET SUPPORT D'ENREGISTREMENT

(30) Priority: 09.01.2020 CN 202010023167
(43) Date of publication of application: 14.07.2021
(73) Proprietor: Beijing DajiaInternet Information Technology Co., Ltd., Beijing 100085 (CN)
(72) Inventor: WU, Shanshan, Beijing, 100085 (CN); PAHAERDING, Paliwan, Beijing, 100085 (CN); YAO, Hebin, Beijing, 100085 (CN)
(74) Representative: Wietzke, Andreas

(56) References cited:
- SONG-HAI ZHANG ET AL: "Online Video Stream Abstraction and Stylization", IEEE TRANSACTIONS ON MULTIMEDIA, IEEE SERVICE CENTER, US, vol. 13, no. 6, 1 December 2011 (2011-12-01), pages 1286-1294, XP011372482, ISSN: 1520-9210, DOI: 10.1109/TMM.2011.2165052

## Description

### Field

The present disclosure relates to the field of image processing, and in particular to a method and device for segmenting an image, and a storage medium.

### Background

With the continuous development of mobile Internet technology, more and more functions can be provided by a mobile equipment, and therefore, the importance of the mobile equipment in the production and life is also increasing. Among the multiple functions provided by the mobile equipment, the shooting function has become a basic function that the users use daily.
Zhang2011, Online Video Stream Abstraction and Stylization, gives an automatic method for online video stream abstraction, producing a temporally coherent output video stream, in a style with large regions of constant color and highlighted bold edges. Our system includes two novel components. Firstly, to provide coherent and simplified output, we segment frames, and use optical flow to propagate segmentation information from frame to frame; an error control strategy is used to help ensure that the propagated information is reliable. Secondly, to achieve coherent and attractive coloring of the output, we use a color scheme replacement algorithm specifically designed for an online video stream. We demonstrate real-time performance for CIF videos, allowing our approach to be used for live communication and other related applications.

### Summary

The present disclosure provides a method and device for segmenting an image, and a storage medium according to claims 1, 5 and 9.

According to an embodiment of the disclosure, a method for segmenting an image is provided. The method includes: acquiring the image; obtaining an initial segmentation result by segmenting a target ground region of the image; and determining a ground segmentation result of the image based on the initial segmentation result and a current accumulation map, where the current accumulation map includes a ground segmentation result of previous image. The determining the ground segmentation result of the image based on the initial segmentation result and the current accumulation map includes: determining the ground segmentation result by mapping, by a pre-installed 3D rendering engine, the initial segmentation result and the current accumulation map to a preset 3D virtual scene corresponding to the 3D rendering engine; the 3D virtual scene includes: a master camera, a map camera, a first plane model and a second plane model. The first plane model and the second plane model are horizontally placed. The master camera is configured to render the second plane model, and correspond to a first camera coordinate system. The map camera is configured to render the first plane model. The map camera is synchronized with the master camera and directed towards horizontal plane of the 3D virtual scene. The determining the ground segmentation result by mapping, by the pre-installed 3D rendering engine, the initial segmentation result and the current accumulation map to the preset 3D virtual scene corresponding to the 3D rendering engine, includes: moving the first plane model, the second plane model and the map camera to align with the master camera vertically; determining a first top view map of the current accumulation map; obtaining a second top view map of the initial segmentation result by rendering the first plane model based on the initial segmentation result and the first top view map; and determining the ground segmentation result by rendering the second plane model based on the initial segmentation result and the second top view map. The first top view map and the second top view map are in a second camera coordinate system corresponding to the map camera.

In some embodiments, the obtaining the second top view map includes: acquiring universal coordinates of the initial segmentation result; calculating first coordinates of the universal coordinates in the first top view map and second coordinates of the universal coordinates in the first camera coordinate system; determining a first probability and countdown of a first pixel corresponding to the first coordinates by sampling the current accumulation map, where the countdown is the number of frames with the first pixel and the first probability; determining a second probability of a second pixel corresponding to the second coordinates based on the initial segmentation result; determining a target probability based on the first probability and the second probability; and obtaining the second top view map of the initial segmentation result in the second camera coordinate system.

In some embodiments, the method further includes: determining that the target probability is the maximum of the first probability and the second probability, in response to that the countdown is greater than zero; and determining that the target probability is the second probability, in response to that the countdown is equal to zero.

In some embodiments, the determining the ground segmentation result includes: determining a third probability of the second pixel; determining third coordinates, where the third coordinates are coordinate values of a third pixel corresponding to the universal coordinates in the second top view map; determining a fourth probability, and determining a final probability is the maximum of the third probability and the fourth probability, in response to that the third coordinates are in a preset range; determining that the final probability is the third probability, in response to that the third coordinates are not in the preset range; and determining the ground segmentation result based on the final probability.

According to an embodiment of the disclosure, a device for segmenting an image is provided. The device includes: an image acquisition module configured to acquire the image; an initial segmentation module configured to obtain an initial segmentation result by segmenting a target ground region of the image; and a final segmentation module configured to determine a ground segmentation result of the image based on the initial segmentation result and a current accumulation map, where the current accumulation map includes a ground segmentation result of previous image. The final segmentation module is further configured to determine the ground segmentation result by mapping, by a pre-installed 3D rendering engine, the initial segmentation result and the current accumulation map to a preset 3D virtual scene corresponding to the 3D rendering engine. The 3D virtual scene includes: a master camera, a map camera, a first plane model and a second plane model. The first plane model and the second plane model are horizontally placed. The master camera is configured to render the second plane model, and correspond to a first camera coordinate system. The map camera is configured to render the first plane model. The map camera is synchronized with the master camera and directed towards horizontal plane of the 3D virtual scene. The final segmentation module includes: an element movement submodule configured to move the first plane model, the second plane model and the map camera to align with the master camera vertically; a current map conversion submodule configured to determine a first top view map of the current accumulation map; a first rendering submodule configured to obtain a second top view map of the initial segmentation result by rendering the first plane model based on the initial segmentation result and the first top view map; and a second rendering submodule configured to determine the ground segmentation result by rendering the second plane model based on the initial segmentation result and the second top view map; where the first top view map and the second top view map are in a second camera coordinate system corresponding to the map camera.

In some embodiments, the first rendering submodule is further configured to: acquire universal coordinates of the initial segmentation result; calculate first coordinates of the universal coordinates in the first top view map and second coordinates of the universal coordinates in the first camera coordinate system; determine a first probability and countdown of a first pixel corresponding to the first coordinates by sampling the current accumulation map, where the countdown is the number of frames with the first pixel and the first probability; determine a second probability of a second pixel corresponding to the second coordinates based on the initial segmentation result; determine a target probability based on the first probability and the second probability; and obtain the second top view map of the initial segmentation result in the second camera coordinate system.

In some embodiments, the first rendering submodule is further configured to: determine that the target probability is the maximum of the first probability and the second probability, in response to that the countdown is greater than zero; and determine that the target probability is the second probability, in response to that the countdown is equal to zero.

In some embodiments, the second rendering submodule is further configured to: determine a third probability of the second pixel; determine third coordinates, where the third coordinates are coordinate values of a third pixel corresponding to the universal coordinates in the second top view map; determine a fourth probability, and determine a final probability is the maximum of the third probability and the fourth probability, in response to that the third coordinates are in a preset range; determine that the final probability is the third probability, in response to that the third coordinates are not in the preset range; and determine the ground segmentation result based on the final probability.

According to an embodiment of the disclosure, a non-transitory computer readable storage medium is provided. When instructions in the storage medium are executed by a processor of an electronic equipment, the electronic equipment executes the method for segmenting an image.

### Brief Description of the Drawings

The accompanying drawings here are incorporated into the specification and constitute a part of the specification. They show the embodiments that comply with the present disclosure, are used to explain the principle of the present disclosure together with the specification, and do not constitute an improper limitation to the present disclosure.
FIG. 1(A) is a schematic diagram of effects of ground segmentation and AR rendering on a collected image.
FIG. 1(B) is a schematic diagram of effects of ground segmentation and AR rendering on the collected image.
FIG. 1(C) is a schematic diagram of effects of ground segmentation and AR rendering on the collected image.
FIG. 2 is a flow chart of a method for segmenting an image according to an embodiment of the disclosure.
FIG. 3 is a schematic diagram of a 3D virtual space corresponding to a 3D rendering engine according to an embodiment of the disclosure.
FIG. 4 is a flow chart of determining a ground segmentation result of an image based on an initial segmentation result and a current accumulation map by using a preset 3D rendering engine and a 3D virtual scene corresponding to the 3D rendering engine according to an embodiment of the disclosure.
FIG. 5 is a schematic diagram of projecting the initial segmentation result obtained in step S22 in FIG. 2 to a horizontal plane in a world coordinate system according to an embodiment of the disclosure.
FIG. 6 is a flow chart of a specific implementation manner of step S43 in FIG. 4 according to an embodiment of the disclosure.
FIG. 7 is a flow chart of a specific implementation manner of step S44 in FIG. 4 according to an embodiment of the disclosure.
FIG. 8 is a block diagram of a device for segmenting an image according to an embodiment of the disclosure.
FIG. 9 is a block diagram of an electronic equipment according to an embodiment of the disclosure.
FIG. 10 is a block diagram of a server according to an embodiment of the disclosure.

### Detailed Description of the Embodiments

In order to enable those of ordinary skill in the art to understand the solutions of the present disclosure, the solutions in the embodiments of the present disclosure will be described in conjunction with the accompanying drawings.

It should be noted that the terms "first", "second" and the like in the specification, claims and accompanying drawings of the present disclosure are used to distinguish similar objects, and are not used to describe a particular order or sequence. It should be understood that the data used as such may be interchanged where appropriate, so that the embodiments of the present disclosure described herein can be implemented in a sequence other than those illustrated or described herein. The implementation manners described in the following embodiments do not represent all implementation manners consistent with the present disclosure. Rather, they are merely examples of devices and methods consistent with some aspects of the present disclosure as described in detail in the appended claims.

At present, in order to provide user experience and increase the fun and vividness of shooting, some client developers based on the shooting function combine the AR (Augmented Reality) technology with the shooting function of the mobile equipment, so that the user can add an item in the virtual world to the shot real world when shooting an image or video.

In the related art, the item in the virtual world is usually added to a certain region in the real world that is shot, and therefore, it is necessary to perform image region segmentation on the shot image first to obtain a region segmentation result. The region segmentation result is the region of the item in the virtual world to be added, and then AR rendering is performed on the region to obtain the image after the item in the virtual world is added.

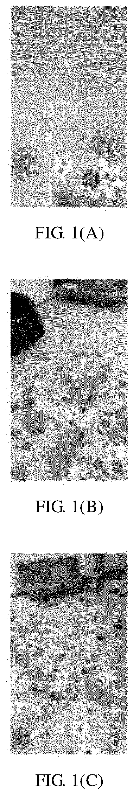

For example, as shown in FIG. 1(A), FIG. 1(B) to FIG. 1(C), when the video image is shot, the ground region in the video image is segmented to obtain the ground region in the video image, and then the virtual flower image is added to the ground region, so that the shot video is funnier.

In the related art, a ground region in an image is segmented based on a preset ground segmentation algorithm. Due to differences in a real world included in acquired frames of the image, in the ground segmentation result obtained by using the preset ground segmentation algorithm, there will be jitter at the junction of the ground region of items in a virtual world to be added obtained by segmentation and other regions, so that the effect of the obtained ground segmentation result is poor.

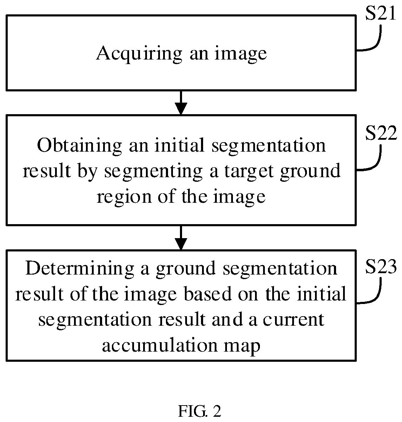

FIG. 2 is a flow chart of a method for segmenting an image according to an embodiment of the disclosure. The method is applied to any electronic equipment that needs to segment a target ground region in the image, such as a mobile phone, a video camera, a notebook computer, a tablet computer and the like.

In some embodiments, the electronic equipment may be an image collection equipment for collecting one or more images. For example, a mobile phone camera or a video camera collects an image of the real world, and the image is used as an image to be segmented; and then the method for segmenting an image provided by the embodiments of the present disclosure is executed on this image. The electronic equipment may also be a server for providing services for the image collection equipment. After collecting an image, the image collection equipment may send the image to a corresponding server, and then, the server executes the method for segmenting an image provided by the embodiments of the present disclosure on the image and feeds a obtained ground segmentation result back to the image collection equipment. This is not limited by the embodiments of the present disclosure, and is hereinafter referred to as an electronic equipment.

As shown in FIG. 2, a method for segmenting an image according to embodiments of the disclosure is provided. The method includes the following steps.

In step S21, an image is acquired by an image collection equipment.

In step S22, an initial segmentation result is obtained by segmenting a target ground region of the image by a preset ground segmentation algorithm.

In step S23, a ground segmentation result of the image is determined based on the initial segmentation result and a current accumulation map.

Wherein the current accumulation map includes a ground segmentation result of a previous image of the image.

The image collection equipment collects an image, and obtains an initial segmentation result by segmenting a target ground region in the image based on the preset ground segmentation algorithm, where the initial segmentation result is not the ground segmentation result adopted in subsequent AR rendering, instead, the initial segmentation result is a ground segmentation result of the image optimized by a ground segmentation result of a previous image.

Thus, when determining the ground segmentation result of the image, references are made to the ground segmentation result of the previous image, so that a smooth transition can be achieved between respective ground segmentation results of images. Thereby, the jitter at the junction of the target ground region of the items in the virtual world to be added and other regions in the obtained ground segmentation result is reduced, so that the effect of the obtained ground segmentation result is improved.

For the step S21 above, the image is acquired by the image collection equipment.

In some embodiments, an electronic equipment may acquire the image in many ways.

In some embodiments, when the electronic equipment is the image collection equipment itself, the images collected by the electronic equipment during image or video shooting processes are images to be segmented.

In some embodiments, when the electronic equipment is a server for providing services for the image collection equipment, the electronic equipment receives the image sent by the image collection equipment. For example, during the image or video shooting processes, the image collection equipment collects one or more images, and sends of the one or more images to the electronic equipment, so that the electronic equipment can acquire the one or more images collected by the image collection equipment.

For the step S22 above, the initial segmentation result is obtained by segmenting the target ground region of the image by the preset ground segmentation algorithm.

In some embodiments, the target ground region may be all ground regions in the image, and may also be a certain type of ground region in the image. For example, when the target ground region in the image includes a plastic runway and an asphalt road, the ground region may be an asphalt road region.

In some embodiments, for different target ground regions, the adopted preset ground segmentation algorithm may also be adjusted accordingly. For example, when the target ground region is all the ground regions in the image, the adopted preset ground segmentation algorithm is a ground segmentation algorithm for segmenting all the ground regions in the image. When the target ground region is a certain type of ground region in the image, the adopted preset ground segmentation algorithm is a ground segmentation algorithm for segmenting this type of ground region in the image, and so on.

In some embodiments, the initial segmentation result is obtained by calculating the target ground region based on the preset ground segmentation algorithm. The initial segmentation result is a two-dimensional bitmap. A value of each pixel in the two-dimensional bitmap represents a probability that the content in the image corresponding to the position of the each pixel is the target ground region. The range of the value of the each pixel is [0, 1].

In some embodiments, the ground segmentation algorithm may adopt a semantic segmentation model based on deep neural networks, where the semantic segmentation model can segment the ground of indoor and outdoor scenes finely and have good robustness for different scenes. The model structure of the semantic segmentation model may be constructed based on the Unet (Unity Networking) framework. Moreover, the input of the semantic segmentation model may be an RGB image, and the output of the semantic segmentation model may be a mask image of a target ground region of the RGB image. Wherein each pixel in the mask image represents the probability that a pixel at the corresponding position in the input image is the ground, and the range of the probability may be [0, 1]. Wherein in the RGB image, R represents Red, G represents Green, and B represents Blue.

In some embodiments, during the model training processes of the above semantic segmentation model, the adopted loss function may be cross-entropy loss, and is used to update parameters of the semantic segmentation model, and the optimizer may be an Adam (Adaptive moment estimation) optimizer. Moreover, when the IOU (Intersection over Union) between the ground prediction result of the semantic segmentation model obtained by training and the real ground is the largest, it is determined that the training is completed.

For the step S23 above, the ground segmentation result of the image is determined based on the initial segmentation result and the current accumulation map.

In some embodiments, after the initial segmentation result of the image is obtained, the initial segmentation result is optimized based on the initial segmentation result and the ground segmentation result of the previous image, to obtain the ground segmentation result of the image, to thereby improve the stability of the obtained ground segmentation result.

In some embodiments, when the ground segmentation result of the image has not been obtained, the image collection equipment displays the image obtained by performing AR rendering on the ground segmentation result of the previous image, and the ground segmentation result of the previous image can be called the current accumulation map.

According to the invention, the step S23 includes: the ground segmentation result is determined by a 3D (3Dimensions) rendering engine and a 3D virtual scene corresponding to the 3D rendering engine.

The 3D rendering engine is pre-installed in the electronic equipment, a 3D virtual scene corresponding to the installed 3D rendering engine can be preset. The electronic equipment calls the 3D rendering engine. In this way, the 3D rendering engine can map the initial segmentation result and the current accumulation map to the 3D virtual scene, and thus, a scene that the image collection equipment collects the image in the real scene is simulated by using the 3D virtual scene, and the ground segmentation result of the image is determined based on the simulated result.

In some embodiments, the 3D rendering engine is a software that renders a virtual 3D scene into a 2D (2Dimensions) image. The virtual 3D scene includes object 3D models and their surface material descriptions, virtual cameras, lights and other elements. When executing rendering, the 3D rendering engine may project a 3D scene into a 2D space through a viewing angle of a specified virtual camera, just like the effect of using real camera equipment to shoot a real world scene The surface material of the 3D model describes how to calculate the color of each pixel in the covered region after the model is projected into the 2D space. The user of the 3D rendering engine can specify which virtual camera is used for rendering and to which image the rendering result is output.

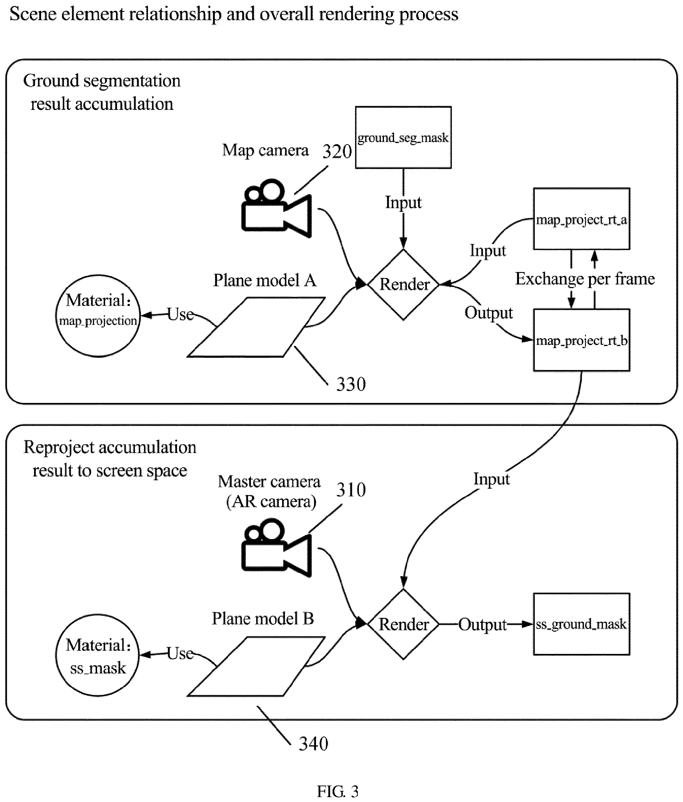

As shown in FIG. 3, the 3D virtual scene corresponding to the preset 3D rendering engine includes a master camera 310, a map camera 320, a first plane model 330 and a second plane model 340.

The first plane model 330 and the second plane model 340 are horizontally placed in the 3D virtual scene.

In some embodiments, the first plane model 330 and the second plane model 340 may be regarded as: square plane three-dimensional models with a certain area that are horizontally placed in the 3D virtual scene. The first plane model 330 and the second plane model 340 are different

A first camera coordinate system corresponding to the master camera 310 is synchronized with a third camera coordinate system of the image collection equipment. The master camera is configured to render the second plane model.

In some embodiments, the position and orientation of the camera of the master camera 310 in the 3D virtual scene are synchronized with the position and orientation of the camera of the image collection equipment in the real world. That is, assuming that the 3D virtual scene is taken as the real world, the camera of the master camera 310 is the camera of the image collection equipment for collecting the image. Further, the first camera coordinate system corresponding to the master camera 310 is synchronized with the third camera coordinate system of the image collection equipment. Therefore, the master camera 310 can use a projection matrix of the image collection equipment.

In this way, the content of each image obtained by the simulated shooting of the master camera 310 is aligned with the content of each image obtained by the shooting of the image collection equipment. The master camera 310 renders the second plane model 340. In some embodiments, the master camera 310 may be an AR camera.

In some examples, the projection matrix is: a matrix for representing a coordinate conversion relationship among the third camera coordinate system, the image coordinate system and the world coordinate system of the image collection equipment. For a specified image collection equipment, the projection matrix may be preset and stored in this image collection equipment. For example, when the image collection equipment is a mobile phone, an API (Application Programming Interface) of an operating system of the mobile phone may be used to query and obtain the projection matrix of the mobile phone directly.

The map camera 320 is a camera of which a position is synchronized with that of the master camera and of which a camera faces a horizontal plane of the 3D virtual scene. The map camera 320 is configured to render the first plane model.

The position of the camera of the map camera 320 in the 3D virtual scene is synchronized with the position of the camera of the image collection equipment in the real world, but the camera of the map camera 320 faces the horizontal plane of the 3D virtual scene. That is, assuming that the 3D virtual scene is taken as the real world, the map camera 320 is the image collection equipment, and the camera of the map camera 320 faces directly below and is configured to vertically shoot the ground of the real world. The right direction of the second camera coordinate system corresponding to the map camera 320 is parallel to the X axis of the world coordinate system. In some embodiments, the plane on which the X axis and the Z axis of the world coordinate system are located is the horizontal plane of the real world, and the Y axis of the world coordinate system is perpendicular to the horizontal plane of the real world.

In some examples, the projection matrix of the map camera 320 is an orthogonal matrix, and the map camera 320 is configured to render the first plane model 330. The length-to-width ratio of the obtained projected image is 1:1, that is, when an image in other coordinate systems is projected into the second camera coordinate system corresponding to the map camera 320, the length-to-width ratio of the obtained image is 1:1.

As shown in FIG. 3, ground_seg_mask represents the initial segmentation result obtained by segmenting a target ground region in the image based on the preset ground segmentation algorithm; map_project_rt_a represents the ground segmentation result of the previous image; map_project_rt_b represents the accumulation result obtained after the initial segmentation result of the image is rendered by the first plane model 330, i.e., map_project_rt_b may represents the second top view map of the initial segmentation result of the image in the second camera coordinate system; ss_ground_mask represents the determined ground segmentation result of the image; the material ss_mask is a preset screen space reprojection program; and the material map projection is a preset ground projection accumulation program.

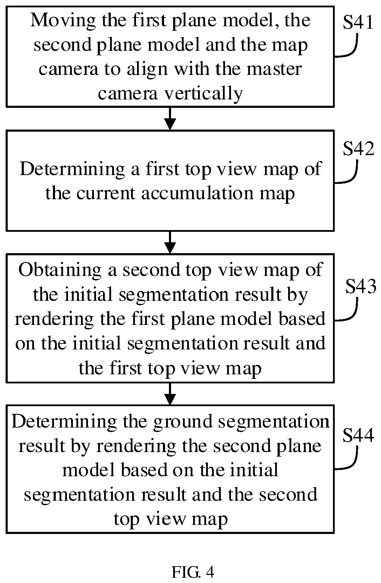

In some examples, on the basis of the 3D virtual scene shown in FIG. 3, as shown in FIG. 4, the determining the ground segmentation result of the image based on the initial segmentation result and the current accumulation map by using the preset 3D rendering engine and the 3D virtual scene includes following steps.

In step S41: the first plane model, the second plane model and the map camera are moved to align with the master camera vertically.

The first plane model, the second plane model and the map camera are moved to the positions vertically aligned with the master camera. The "vertically aligned" means that: in the 3D virtual scene, the X-axis coordinate components of the first plane model, the second plane model and the map camera after the movement are the same as the X-axis coordinate component of the master camera, and the Z-axis coordinate components of the first plane model, the second plane model and the map camera after the movement are the same as the Z-axis coordinate component of the master camera.

In step S42: a first top view map of the current accumulation map in a second camera coordinate system corresponding to the map camera is determined.

Since the current accumulation map is the ground segmentation result of the previous image and the current accumulation map is presented on a display screen of the image collection equipment, the ground segmentation result is located in the third camera coordinate system corresponding to the image collection equipment. Based on this, when determining the ground segmentation result of the image, the 3D rendering engine needs to convert the image into the 3D virtual scene corresponding to the 3D rendering engine.

In some examples, since the projection matrix used by the master camera is the projection matrix of the image collection equipment, when the map camera is moved to the position vertically aligned with the master camera in the step S41, a positional relationship between the map camera and the master camera can be established, where since the first camera coordinate system corresponding to the master camera is synchronized with the third camera coordinate system of the image collection equipment, a corresponding relationship between the map camera and the image collection equipment can be established. In this way, according to the corresponding relationship between the map camera and the image collection equipment and the projection matrix of the master camera, the first top view map of the current accumulation map in the second camera coordinate system corresponding to the map camera is determined through coordinate conversion.

In some embodiments, the length-to-width ratio of the first top view map is 1:1. The first top view map can be used to represent the span of the first top view map on the X axis and the Z axis in the second camera coordinate system corresponding to the map camera, i.e.: (x1_min, x1_max, z1_min, z1_max), that is, the area covered on the horizontal plane when the current accumulation map is projected onto the horizontal plane of the second camera coordinate system corresponding to the map camera.

In step S43: a second top view map of the initial segmentation result is obtained by rendering the first plane model based on the initial segmentation result and the first top view map.

In some examples, since the initial segmentation result is obtained by performing target ground segmentation on the image by using the preset ground segmentation algorithm, the initial segmentation result is also located in the third camera coordinate system corresponding to the image collection equipment. Based on this, when determining the ground segmentation result of the image, the 3D rendering engine also needs to convert the image into the 3D virtual scene corresponding to the 3D rendering engine.

In this way, after the first top view map is obtained, the first plane model can be rendered based on the initial segmentation result and the first top view map to obtain the second top view map of the initial segmentation result in the second camera coordinate system.

In some examples, based on the initial segmentation result obtained in the step S22 and the first top view map, according to the corresponding relationship between the master camera and the image collection equipment obtained by position movement in the step S41 and the projection matrix of the master camera, the second top view map of the initial segmentation result in the second camera coordinate system corresponding to the map camera is obtained through coordinate conversion.

Similar to the first top view map, the length-to-width ratio of the second top view map is 1:1, and the second top view map represents the span of the second top view map on the X axis and the Z axis in the second camera coordinate system corresponding to the map camera, i.e.: (x2 min, x2 max, z2 min, z2 max), that is, the area covered on the horizontal plane when the image corresponding to the initial segmentation result is projected onto the horizontal plane of the second camera coordinate system corresponding to the map camera.

In some examples, the step S43 may be implemented by the 3D rendering engine executing a preset ground projection accumulation program (map_projection). The input of the ground projection accumulation program is: the above initial segmentation result, the first top view map and the projection matrix of the master camera, and the output is: the above second top view map.

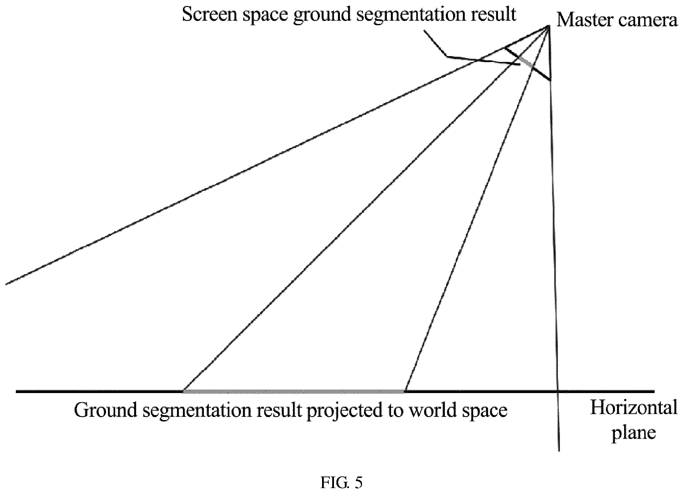

In some examples, the ground projection accumulation program is configured to project the initial segmentation result located in the third camera coordinate system corresponding to the image collection equipment onto the horizontal plane in the world coordinate system, that is, onto the XZ plane of the world coordinate system, as shown in FIG. 5. Wherein the screen space ground segmentation result in FIG. 5 is: the initial segmentation result located in the third camera coordinate system.

In step S44: the ground segmentation result of the image is obtained by rendering the second plane model based on the initial segmentation result and the second top view map.

The ground segmentation result of the image is presented on the display screen of the image collection equipment, that is, the ground segmentation result of the image is located in the third camera coordinate system corresponding to the image collection equipment. The second top view map of the initial segmentation result in the second camera coordinate system is located in the second camera coordinate system corresponding to the map camera, that is, the second top view map is located in the 3D virtual scene corresponding to the 3D rendering engine. Therefore, when determining the ground segmentation result of the image, the 3D rendering engine needs to reconvert the second top view map from the 3D virtual scene corresponding to the 3D rendering engine into the above third camera coordinate system.

In this way, after the second top view map of the initial segmentation result in the second camera coordinate system is obtained, the second plane model can be rendered based on the initial segmentation result and the second top view map to obtain the ground segmentation result of the image.

Based on the initial segmentation result and the first top view map, according to the corresponding relationship between the master camera and the image collection equipment obtained by position movement in the step S41 above and the projection matrix of the master camera, the ground segmentation result of the image is obtained through coordinate conversion.

In some examples, the step S44 may be implemented by the 3D rendering engine executing a preset screen space reprojection program (ss_mask). The input of the ground projection accumulation program is: the above initial segmentation result, the second top view map and the projection matrix of the master camera, and the output is: the ground segmentation result of the image.

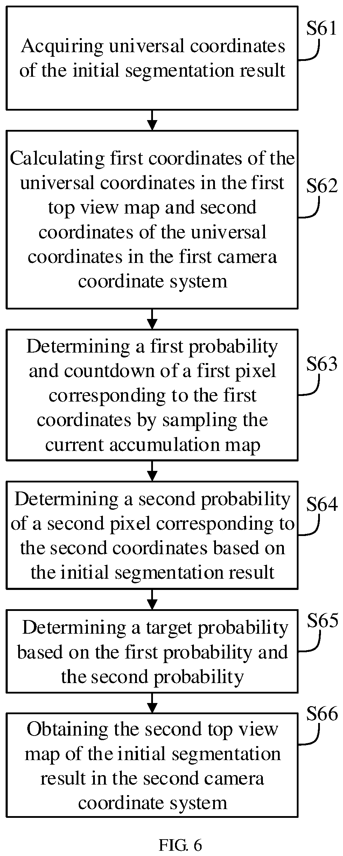

In some examples, as shown in FIG. 6, the step S43 includes the following steps.

In step S61, universal coordinates of the initial segmentation result in a preset world coordinate system are acquired.

Since the initial segmentation result is obtained by performing target ground segmentation on the image by using the preset ground segmentation algorithm, the initial segmentation result is also located in the third camera coordinate system corresponding to the image collection equipment for collecting the image. Based on this, the initial segmentation result can be projected into the preset world coordinate system through matrix transformation by using the projection matrix of the image collection equipment for collecting the image, thereby determining the universal coordinates of the initial segmentation result in the world coordinate system.

In step S62, first coordinates of the universal coordinates in the first top view map and second coordinates of the universal coordinates in the first camera coordinate system corresponding to the master camera are calculated. In some embodiments, the first coordinate may be a top view region coordinate, and the second coordinate may be a main camera space coordinate.

After the universal coordinates of the initial segmentation result in the world coordinate system are acquired, the universal coordinates can be mapped into the 3D virtual scene corresponding to the 3D rendering engine to obtain the coordinates related to the map camera and the master camera in the 3D virtual scene.

In some embodiments, the current accumulation map is the ground segmentation result of the previous image, and the image region corresponding to the initial segmentation result is a region in the image to be segmented, that is, the image regions corresponding to the current accumulation map and the initial segmentation result are regions included in the continuous images. In this way, during the continuous shooting, the changes between every two adjacent frames of image collected are small, therefore, the same region may exist in the regions corresponding to the current accumulation map and the initial segmentation result. Furthermore, since the first top view map obtained above is the first top view map of the current accumulation map in the second camera coordinate system corresponding to the map camera, the initial segmentation result may also have the same region between the second top view map in the second camera coordinate system and the first top view map.

Based on this, according to the corresponding relationship between the master camera and the image collection equipment for collecting the image obtained by position movement in the step S41 above and the projection matrix of the master camera, the first coordinates of the above universal coordinates in the first top view map can be calculated through coordinate conversion.

In some examples, since the projection matrix of the master camera is the projection matrix of the image collection equipment for collecting the image and the above universal coordinates are the universal coordinates of the initial segmentation result in the preset world coordinate system, the second coordinates of the universal coordinates in the first camera coordinate system corresponding to the master camera can be calculated by using the projection matrix of the master camera.

In step S63, a first probability and countdown of a first pixel corresponding to the first coordinates are determined by sampling the current accumulation map.

Wherein in the current accumulation map, a countdown of each of the first pixels is configured to characterize a number of frames for continuing retaining the first probability of the first pixel. In some embodiments, the countdown may be the number of frames with the first pixel and the first probability.

The above first top view map is obtained by projecting the current accumulation map into the second camera coordinate system corresponding to the map camera, and therefore, each pixel in the first top view map corresponds to a pixel in the current accumulation map. Furthermore, the first probability and the countdown of the pixel can be obtained by sampling the current accumulation map.

Based on this, the first coordinates calculated above are part of the region in the first top view map, and therefore, each pixel in the first coordinates also corresponds to a pixel in the current accumulation map. Furthermore, the first probability and the countdown of the pixel can be obtained by sampling the current accumulation map.

When the first probability and the countdown can not be obtained by sampling a pixel corresponding to the first coordinates in the current accumulation map, the first probability and the countdown of the pixel are set to 0.

In the current accumulation map, a countdown of a pixel represents a number of frames for continuing retaining the first probability of the pixel. For each pixel in the current accumulation map, when the pixel is located in the viewable region of the master camera in the 3D rendering scene, the countdown of the pixel can be reset to a predetermined value, that is, to the maximum value of countdowns. When the pixel is located outside the viewable region of the master camera in the 3D rendering scene, 1 can be subtracted from the countdown of the pixel. When the countdown of a pixel is reduced to 0, the first probability of the pixel is reset to 0. The countdown of each pixel in the viewable region of the master camera in the 3D rendering scene will remain at the maximum value, and the first probability thereof will remain unchanged.

In step S64, a second probability of a second pixel corresponding to the second coordinates is determined based on the initial segmentation result.

The above second coordinates are obtained by projecting the initial segmentation result into the first camera coordinate system corresponding to the master camera, and therefore, each pixel in the second coordinates corresponds to a pixel in the initial segmentation result. Furthermore, the initial segmentation result is a two-dimensional bitmap, and the value of each pixel in the two-dimensional bitmap represents the probability that the content in the image corresponding to the pixel position is the target region. Based on this, the second probability of the pixel is obtained by sampling the initial segmentation result.

In step S65, a target probability is determined based on the first probability and the second probability. The target probability is the maximum of the first probability and the second probability, in response to that the countdown is greater than zero.

In some embodiments, for each pixel corresponding to the universal coordinates, a maximum of the first probability and the second probability corresponding to the pixel is determined as a target probability of the pixel in response to that the countdown of the pixel is greater than zero.

The target probability is the second probability in response to that the countdown is equal to zero.

In some embodiments, for each pixel corresponding to the universal coordinates, the second probability corresponding to the pixel is determined as the target probability of the pixel in response to that the countdown of the pixel is equal to zero.

In step S66, the second top view map of the initial segmentation result in the second camera coordinate system is obtained.

That is, the second top view map of the initial segmentation result in the second camera coordinate system is determined based on the target probability of each pixel corresponding to the universal coordinates.

The first coordinates are coordinates of the universal coordinates in the first top view map, and the second coordinates are coordinates of the universal coordinates in the first camera coordinate system corresponding to the master camera. Each pixel in the first coordinates may be in one-to-one correspondence to each pixel in the second coordinates.

Furthermore, for each pixel corresponding to the universal coordinates, when the countdown of the pixel is greater than zero, the maximum of the first probability and the second probability corresponding to the pixel can be determined as the target probability of the pixel, and 1 is subtracted from the countdown of the pixel.

When the countdown of the pixel is equal to zero, the second probability corresponding to the pixel can be determined as the target probability of the pixel.

In this way, the target probability of each pixel corresponding to the universal coordinates can be obtained, and furthermore, by outputting the target probability of each pixel, the second top view map of the initial segmentation result in the second camera coordinate system can be obtained.

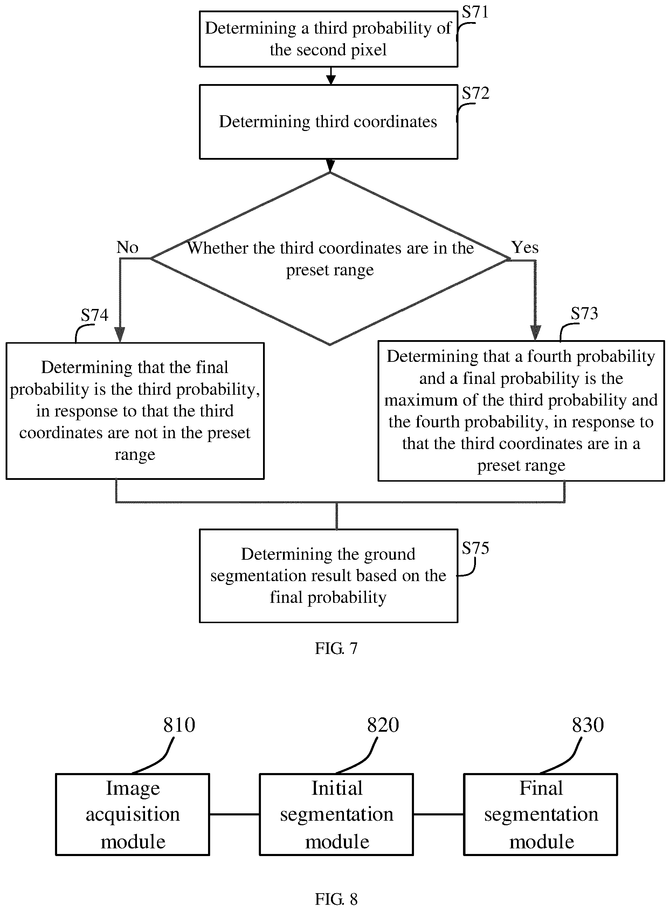

In some embodiments, as shown in FIG. 7, the step S44 includes the following steps.

In step S71, a third probability of the second pixel is obtained.

That is, a third probability of each pixel in the initial segmentation result is sampled.

After obtaining the initial segmentation result, since the initial segmentation result is a two-dimensional bitmap and the value of each pixel in the two-dimensional bitmap represents the probability that the content in the image corresponding to the pixel position is the target region, the third probability of each pixel in the initial segmentation result can be directly sampled.

In step S72, third coordinates are determined. The third coordinate may be a top view pixel coordinate. The third coordinates are coordinate values of a third pixel corresponding to the universal coordinates in the second top view map.

In some embodiments, the third coordinates of each pixel in the universal coordinates in the second top view map are calculated, and a fourth probability of the pixel in the second top view map is sampled when the third coordinates are located within a preset range.

The universal coordinates are coordinates corresponding to the initial segmentation result in the world coordinate system, and the second top view map is the second top view map of the initial segmentation result in the second camera coordinate system. Furthermore, according to the corresponding relationship between the master camera and the image collection equipment for collecting the image obtained by position movement in the step S41 above and the projection matrix of the master camera, the top view pixel coordinates of each pixel in the universal coordinates in the second top view map can be obtained through coordinate conversion.

When each pixel in the initial segmentation result is located in an image effective range, the pixel can be output as the ground segmentation region of the image, so in the step S72 above, the pixel in the initial segmentation result corresponding to the third coordinates being located in the image effective range can be characterized by the obtained third coordinates being located in the preset range. Therefore, when obtaining the third coordinates, it is necessary to further determine whether the third coordinates are located in the preset range, and when the obtained third coordinates are located in the preset range, the fourth probability of the pixel can be collected from the second top view map.

In some examples, the above preset range may be [0, 1]. When the X value of the third coordinates is less than 0, it is determined that the pixel corresponding to the third coordinates is located outside the left edge of the image effective range. When the X value is greater than 0, it is determined that the pixel corresponding to the third coordinates is located outside the right edge of the image effective range.

When the obtained third coordinates are not located in the preset range, the fourth probability of the pixel cannot be collected.

In step S73, in response to that the third coordinates are in a preset range, a fourth probability is determined, and a final probability is the maximum of the third probability and the fourth probability.

For each pixel having the fourth probability, the maximum of the third probability and the fourth probability of the pixel is determined as a final probability of the pixel.

In step S74, in response to that the third coordinates are not in the preset range, the final probability is the third probability.

For each pixel not having the fourth probability, the third probability of the pixel is determined as the final probability of the pixel.

In step S75, the ground segmentation result of the image is determined based on the final probability of each pixel in the initial segmentation result.

The above universal coordinates are coordinates of the initial segmentation result in the preset world coordinate system, and therefore, each pixel in the initial segmentation result may be in one-to-one correspondence to each pixel in the universal coordinates.

Furthermore, for each pixel corresponding to the initial segmentation result, when the pixel has the fourth probability, the maximum value of the third probability and the fourth probability of the pixel can be determined as the final probability of the pixel.

Correspondingly, when the pixel does not have the fourth probability, the third probability of the pixel can be determined as the final probability of the pixel.

In this way, the final probability of each pixel corresponding to the initial segmentation result can be obtained, and furthermore, by outputting the final probability of each pixel, the ground segmentation result of the image can be obtained.

In this way, the region existing in the initial segmentation region but not existing in the current accumulation map can be added into the ground segmentation result of the image to be segmented, and the edge of the obtained ground segmentation result can be prevented from appearing jagged.

The steps S41-S44 included in FIG. 4 above are all implemented by an electronic equipment calling the 3D rendering engine.

In some embodiments, the 3D rendering engine includes a vertex shader and a pixel shader. The step S43 and step 44 may be implemented by using the vertex shader and the pixel shader

That is, the vertex shader and the pixel shader are used to execute the steps S61-S66 and the steps S71-S75.

When the vertex shader and the pixel shader are used to execute the steps S61-S66, the vertex shader is configured to transfer a position in the world coordinate system of each pixel of a first plane model within a visible range of the map camera into the pixel shader. Multiplying a world space transformation matrix of a first plane model and a vertex position thereof can obtain a position of the vertex in the world coordinate system, and the position of the vertex in the world coordinate system can be transferred into the pixel shader to obtain the position of each pixel in the world coordinate system through automatic interpolation. Multiplying the position of the vertex in the world coordinate system and a projection matrix of the map camera can obtain a projection space position, and the projection space position is used as an output position of the vertex shader. As long as the plane model A is large enough, it can be ensured that the pixel shader can cover all the pixels of the accumulation map. Correspondingly, the pixel shader executes the steps S61-S66.

When the vertex shader and the pixel shader are used to execute the steps S71-S75, the vertex shader is configured to transfer a position in the world coordinate system of each pixel of a second plane model within a visible range of the master camera into the pixel shader. Multiplying a world space transformation matrix of the second plane model and a vertex position thereof can obtain a position of the vertex in the world coordinate system, and a position of the vertex in the world coordinate system can be transferred into the pixel shader to obtain the position of each pixel in the world coordinate system through automatic interpolation. Multiplying a position of the vertex in the world coordinate system and a projection matrix of the map camera can obtain a projection space position, and the projection space position is used as an output position of the vertex shader. Correspondingly, the pixel shader executes the steps S71-S75.

In some examples, after the ground segmentation result of the image is obtained, AR rendering can be performed on the image, that is, items in the preset virtual space is added into the region corresponding to the ground segmentation result, thereby increasing the fun of the shot image and improving the user experience.

FIG. 8 is a block diagram of a device for segmenting an image according to an embodiment of the disclosure. The device is applied to an electronic equipment. Referring to FIG. 8, the device includes an image acquisition module 810, an initial segmentation module 820 and a final segmentation module 830.

The image acquisition module 810 is configured to acquire an image.

The initial segmentation module 820 is configured to obtain an initial segmentation result by segmenting a target ground region of the image based on a preset ground segmentation algorithm.

The final segmentation module 830 is configured to determine a ground segmentation result of the image based on the initial segmentation result and a current accumulation map.

Wherein the current accumulation map comprises a ground segmentation result of a previous image.

The final segmentation module 830 is configured to: determine the ground segmentation result by a 3D rendering engine and a 3D virtual scene corresponding to the 3D rendering engine.

The 3D virtual scene includes: a master camera, a map camera, a first plane model and a second plane model.

Wherein the first plane model and the second plane model are horizontally placed in the 3D virtual scene

The master camera is configured to render the second plane model, and correspond to a first camera coordinate system.

The map camera is configured to render the first plane model, where the map camera is synchronized with the master camera and directed towards horizontal plane of the 3D virtual scene.

The final segmentation module 830 includes: an element movement submodule, configured to move the first plane model, the second plane model and the map camera to align with the master camera vertically; a current map conversion submodule, configured to determine a first top view map of the current accumulation map; a first rendering submodule, configured to obtain a second top view map of the initial segmentation result in the second camera coordinate system by rendering the first plane model based on the initial segmentation result and the first top view map; and a second rendering submodule, configured to obtain the ground segmentation result of the image by rendering the second plane model based on the initial segmentation result and the second top view map. The first top view map and the second top view map are in a second camera coordinate system corresponding to the map camera.

The first rendering submodule is configured to: acquire universal coordinates of the initial segmentation result; calculate first coordinates of the universal coordinates in the first top view map and second coordinates of the universal coordinates in the first camera coordinate system; determine a first probability and countdown of a first pixel corresponding to the first coordinates by sampling the current accumulation map; where the countdown is the number of frames with the first pixel and the first probability; determine a second probability of a second pixel corresponding to the second coordinates based on the initial segmentation result; determine a target probability based on the first probability and the second probability; in response to that the countdown is greater than zero, determine that the target probability is the maximum of the first probability and the second probability; and in response to that the countdown is equal to zero, determine that the target probability is the second probability; and determine the second top view map of the initial segmentation result in the second camera coordinate system based on the target probability.

The second rendering submodule is configured to: determine a third probability of the second pixel; determine third coordinates, where the third coordinates are coordinate values of a third pixel corresponding to the universal coordinates in the second top view map; in response to that the third coordinates are in a preset range, determine a fourth probability, and determine a final probability is the maximum of the third probability and the fourth probability; in response to that the third coordinates are not in the preset range, determine that the final probability is the third probability; and determine the ground segmentation result based on the final probability.

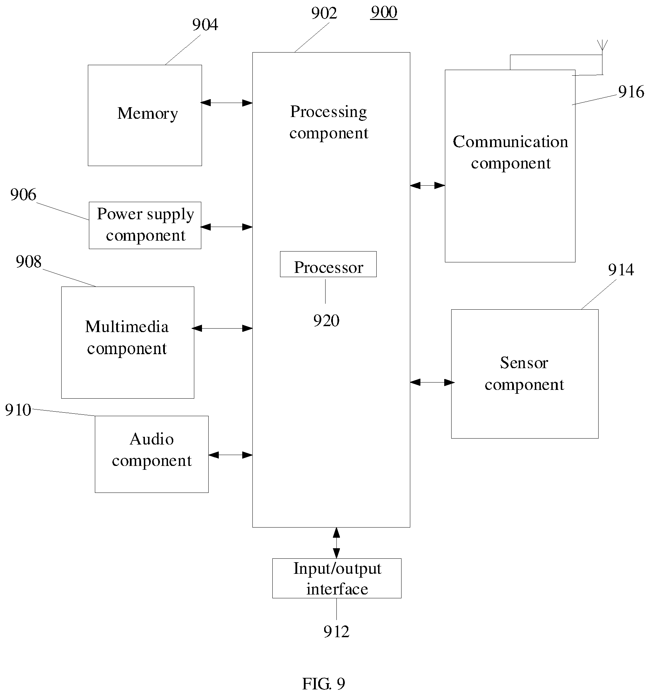

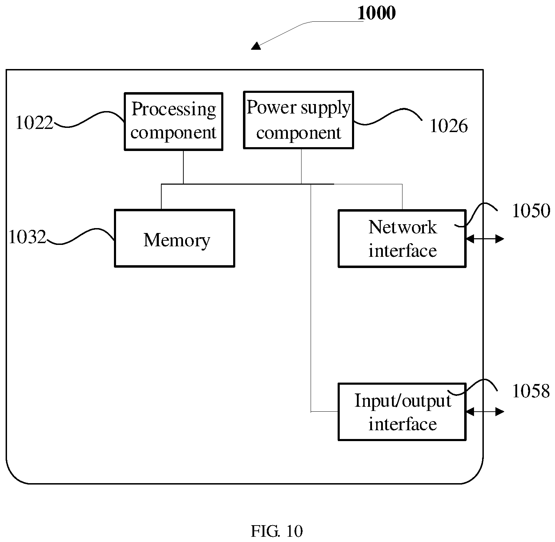

The following Fig. 9 and Fig. 10 and the corresponding embodiments are not according to the invention and are present for illustration purposes only.

FIG. 9 is a block diagram of an electronic equipment 900 for segmenting an image according to an embodiment of the disclosure.

In some examples, the electronic equipment 900 may be a mobile phone, a computer, a digital broadcasting terminal, a message receiving or transmitting equipment, a game console, a tablet equipment, a medical equipment, a fitness equipment, a personal digital assistant and the like

Referring to FIG. 9, the electronic equipment 900 may include one or more of the following components: a processing component 902, a memory 904, a power supply component 906, a multimedia component 908, an audio component 910, an input/output (I/O) interface 912, a sensor component 914 and a communication component 916.

The processing component 902 controls overall operations of the electronic equipment 900, such as operations associated with display, telephone calls, data communication, camera operations and recording operations. The processing component 902 may include one or more processors 920 to execute instructions to complete all or part of the steps of the method for segmenting an image.

The processing component 902 may include one or more modules to facilitate the interaction between the processing component 902 and other components. For example, the processing component 902 may include a multimedia module to facilitate the interaction between the multimedia component 908 and the processing component 902.

The memory 904 is configured to store various types of data to support operations in the electronic equipment 900. Examples of these data include instructions for any application or method operating on the electronic equipment 900, contact data, phone book data, messages, pictures, videos and the like. The memory 904 may be implemented by any type of volatile or non-volatile storage equipment or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 906 provides power to various components of the electronic equipment 900. The power supply component 906 may include a power supply management system, one or more power supplies, and other components associated with generation, management and distribution of power for the electronic equipment 900.

The multimedia component 908 includes a screen that provides an output interface between the electronic equipment 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touch, swipe and gestures on the touch panel. The touch sensor may not only sense the boundary of a touch or swipe action, but also detect the duration and pressure related to the touch or swipe operation. In some embodiments, the multimedia component 908 includes a front camera and/or a rear camera. When the equipment 900 is in an operation mode, such as a shooting mode or a video mode, the front camera and/or the rear camera can receive external multimedia data. Each of the front camera and the rear camera may be a fixed optical lens system or have focal length and optical zoom capabilities.

The audio component 910 is configured to output and/or input audio signals. For example, the audio component 910 includes a microphone (MIC). When the electronic equipment 900 is in an operation mode, such as a call mode, a recording mode and a voice recognition mode, the microphone is configured to receive an external audio signal. The received audio signal may be further stored in the memory 904 or transmitted via the communication component 916. In some embodiments, the audio component 910 further includes a speaker for outputting audio signals.

The I/O interface 912 provides an interface between the processing component 902 and a peripheral interface module. The above peripheral interface module may be a keyboard, a click wheel, buttons and the like. These buttons may include, but are not limited to: a home button, a volume button, a start button and a lock button.

The sensor component 914 includes one or more sensors for providing various aspects of state evaluation to the electronic equipment 900. For example, the sensor component 914 can detect the on/off state of the equipment 900 and the relative positioning of the components. For example, the components are a display and a keypad of the electronic equipment 900. The sensor component 914 may also detect the position change of the electronic equipment 900 or a component of the electronic equipment 900, the presence or absence of contact between the user and the electronic equipment 900, the orientation or acceleration/deceleration of the electronic equipment 900, and the temperature change of the electronic equipment 900. The sensor component 914 may include a proximity sensor configured to detect the presence of nearby objects when there is no physical contact. The sensor component 914 may further include a light sensor, such as a CMOS or CCD image sensor, for use in imaging applications. In some embodiments, the sensor component 914 may further include an acceleration sensor, a gyroscope sensor, a magnetic sensor, a pressure sensor or a temperature sensor.

The communication component 916 is configured to facilitate wired or wireless communication between the electronic equipment 900 and other equipment. The electronic equipment 900 can access a wireless network based on a communication standard, such as WiFi, an operator network (such as 2G, 3G, 4G or 5G) or a combination thereof.

In some embodiments, the communication component 916 receives a broadcast signal from an external broadcast management system or broadcasts related information via a broadcast channel.

In some embodiments, the communication component 916 further includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In some embodiments, the electronic equipment 900 can be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic elements, and is used to execute the above method.

In some embodiments, there is further provided a storage medium including instructions, for example, a memory 904 including instructions. The above instructions may be executed by the processor 920 of the electronic equipment 900 to complete the above image region segmentation method. Optionally, the storage medium may be a non-transitory computer-readable storage medium, for example, the non-transitory computer-readable storage medium may be an ROM, a random access memory (RAM), a CD-ROM, a magnetic tape, a floppy disk, optical data storage equipment or the like.

FIG. 10 is a block diagram of a server 1000 for a method for segmenting an image according to an embodiment of the disclosure. Referring to FIG. 10, the server 1000 includes a processing component 1022, which further includes one or more processors, and a memory resource represented by a memory 1032, for storing instructions executable by the processing component 1022, such as applications. The application stored in the memory 1032 may include one or more modules each corresponding to a set of instructions. In addition, the processing component 1022 is configured to execute instructions to execute the above method.

The server 1000 may further include a power supply component 1026 configured to execute power supply management of the server 1000, a wired or wireless network interface 1050 configured to connect the server 1000 to the network, and an input/output (I/O) interface 1058. The server 1000 can operate based on an operating system stored in the memory 1032, for example, Windows ServerTM, Mac OS XTM, UnixTM, LinuxTM, FreeBSDTM or the like.

Those skilled in the art will easily think of other implementations of the present disclosure after considering the specification and practicing the invention disclosed herein. The present application is intended to cover any variations, uses or adaptations of the present disclosure. These variations, uses or adaptations follow the general principles of the present disclosure and include common knowledge or conventional technical means in the technical field that are not disclosed in the present disclosure. The specification and the embodiments are only to be regarded as exemplary, and the true scope of the present disclosure is pointed out by the following claims.

It should be understood that the present disclosure is not limited to the precise structure that has been described above and shown in the accompanying drawings, and various modifications and changes can be made without departing from its scope. The scope of the present disclosure is only limited by the appended claims.

## Claims

1. A computer-implemented method for segmenting an image, applied to an electronic equipment, and comprising:
acquiring (S21) the image;
obtaining (S22) an initial segmentation result by segmenting a target ground region of the image; and
determining (S23) a ground segmentation result of the image based on the initial segmentation result and a current accumulation map,
wherein the current accumulation map comprises a ground segmentation result of a previous image;
**characterized in that**, the determining (S23) the ground segmentation result of the image based on the initial segmentation result and the current accumulation map comprises:
determining the ground segmentation result by mapping, by a pre-installed 3D rendering engine, the initial segmentation result and the current accumulation map to a preset 3D virtual scene corresponding to the 3D rendering engine; wherein the 3D virtual scene comprises: a master camera, a map camera, a first plane model and a second plane model; wherein the first plane model and the second plane model are horizontally placed; the master camera is configured to render the second plane model, and correspond to a first camera coordinate system; and the map camera is configured to render the first plane model, wherein the map camera is synchronized with the master camera and directed towards horizontal plane of the 3D virtual scene;
wherein the determining the ground segmentation result by mapping, by the pre-installed 3D rendering engine, the initial segmentation result and the current accumulation map to the preset 3D virtual scene corresponding to the 3D rendering engine, comprises:
moving (S41) the first plane model, the second plane model and the map camera to align with the master camera vertically;
determining (S42) a first top view map of the current accumulation map;
obtaining (S43) a second top view map of the initial segmentation result by rendering the first plane model based on the initial segmentation result and the first top view map; and
determining (S44) the ground segmentation result by rendering the second plane model based on the initial segmentation result and the second top view map;
wherein the first top view map and the second top view map are in a second camera coordinate system corresponding to the map camera.

2. The method according to claim 1, wherein said obtaining (S43) the second top view map comprises:
acquiring (S61) universal coordinates of the initial segmentation result;
calculating (S62) first coordinates of the universal coordinates in the first top view map and second coordinates of the universal coordinates in the first camera coordinate system;
determining (S63) a first probability and countdown of a first pixel corresponding to the first coordinates by sampling the current accumulation map, wherein the countdown is the number of frames with the first pixel and the first probability;
determining (S64) a second probability of a second pixel corresponding to the second coordinates based on the initial segmentation result;
determining (S65) a target probability based on the first probability and the second probability; and
obtaining (S66) the second top view map of the initial segmentation result in the second camera coordinate system.

3. The method according to claim 2, further comprising:
determining that the target probability is the maximum of the first probability and the second probability, in response to that the countdown is greater than zero; and
determining that the target probability is the second probability, in response to that the countdown is equal to zero.

4. The method according to claim 2, wherein said determining (S23) the ground segmentation result comprises:
determining (S71) a third probability of the second pixel;
determining (S72) third coordinates, wherein the third coordinates are coordinate values of a third pixel corresponding to the universal coordinates in the second top view map;
determining (S73) a fourth probability, and determining a final probability is the maximum of the third probability and the fourth probability, in response to that the third coordinates are in a preset range;
determining (S74) that the final probability is the third probability, in response to that the third coordinates are not in the preset range; and
determining (S75) the ground segmentation result based on the final probability.

5. A device for segmenting an image, comprising:
an image acquisition module (810) configured to acquire the image;
an initial segmentation module (820) configured to obtain an initial segmentation result by segmenting a target ground region of the image; and
a final segmentation module (830) configured to determine a ground segmentation result of the image based on the initial segmentation result and a current accumulation map,
wherein the current accumulation map comprises a ground segmentation result of a previous image;
**characterized in that**, the final segmentation module (830) is further configured to determine the ground segmentation result by mapping, by a pre-installed 3D rendering engine, the initial segmentation result and the current accumulation map to a preset 3D virtual scene corresponding to the 3D rendering engine; wherein the 3D virtual scene comprises: a master camera, a map camera, a first plane model and a second plane model; wherein the first plane model and the second plane model are horizontally placed; the master camera is configured to render the second plane model, and correspond to a first camera coordinate system; and the map camera is configured to render the first plane model, wherein the map camera is synchronized with the master camera and directed towards horizontal plane of the 3D virtual scene;
wherein the final segmentation module (830) comprises:
an element movement submodule configured to move the first plane model, the second plane model and the map camera to align with the master camera vertically;
a current map conversion submodule configured to determine a first top view map of the current accumulation map;
a first rendering submodule configured to obtain a second top view map of the initial segmentation result by rendering the first plane model based on the initial segmentation result and the first top view map; and
a second rendering submodule configured to determine the ground segmentation result by rendering the second plane model based on the initial segmentation result and the second top view map;
wherein the first top view map and the second top view map are in a second camera coordinate system corresponding to the map camera.

6. The device according to claim 5, wherein the first rendering submodule is further configured to:
acquire universal coordinates of the initial segmentation result;
calculate first coordinates of the universal coordinates in the first top view map and second coordinates of the universal coordinates in the first camera coordinate system;
determine a first probability and countdown of a first pixel corresponding to the first coordinates by sampling the current accumulation map, wherein the countdown is the number of frames with the first pixel and the first probability;
determine a second probability of a second pixel corresponding to the second coordinates based on the initial segmentation result;
determine a target probability based on the first probability and the second probability; and
obtain the second top view map of the initial segmentation result in the second camera coordinate system.

7. The device according to claim 6, wherein the first rendering submodule is further configured to:
determine that the target probability is the maximum of the first probability and the second probability, in response to that the countdown is greater than zero; and
determine that the target probability is the second probability, in response to that the countdown is equal to zero.

8. The device according to claim 6, wherein the second rendering submodule is further configured to:
determine a third probability of the second pixel;
determine third coordinates, wherein the third coordinates are coordinate values of a third pixel corresponding to the universal coordinates in the second top view map;
determine a fourth probability, and determine a final probability is the maximum of the third probability and the fourth probability, in response to that the third coordinates are in a preset range;
determine that the final probability is the third probability, in response to that the third coordinates are not in the preset range; and
determine the ground segmentation result based on the final probability.

9. A non-transitory computer readable storage medium, **characterized in that**, when instructions in the storage medium are executed by a processor of an electronic equipment, the electronic equipment executes the method of any one of claims 1-4.

## Patentansprüche

1. Computerimplementiertes Verfahren zur Segmentierung eines Bildes, das auf ein elektronisches Gerät angewendet wird und Folgendes umfasst:
Erfassen (S21) des Bildes;
Erhalten (S22) eines anfänglichen Segmentierungsergebnisses durch Segmentieren einer Zielgrundregion des Bildes; und
Bestimmen (S23) eines Grundsegmentierungsergebnisses des Bildes basierend auf dem anfänglichen Segmentierungsergebnis und einer aktuellen Akkumulationskarte,
wobei die aktuelle Akkumulationskarte ein Grundsegmentierungsergebnis eines früheren Bildes umfasst;
**dadurch gekennzeichnet, dass** das Bestimmen (S23) des Grundsegmentierungsergebnisses des Bildes basierend auf dem anfänglichen Segmentierungsergebnis und der aktuellen Akkumulationskarte umfasst:
Bestimmen des Grundsegmentierungsergebnisses durch Abbilden des anfänglichen Segmentierungsergebnisses und der aktuellen Akkumulationskarte auf eine voreingestellte virtuelle 3D-Szene, die der 3D-Rendering-Engine entspricht, durch eine vorinstallierte 3D-Rendering-Engine; wobei die virtuelle 3D-Szene umfasst: eine Hauptkamera, eine Abbildungskamera, ein erstes Ebenenmodell und ein zweites Ebenenmodell; wobei das erste Ebenenmodell und das zweite Ebenenmodell horizontal angeordnet sind; die Hauptkamera so konfiguriert ist, dass sie das zweite Ebenenmodell abbildet und einem ersten Kamerakoordinatensystem entspricht; und die Abbildungskamera so konfiguriert ist, dass sie das erste Ebenenmodell abbildet, wobei die Abbildungskamera mit der Hauptkamera synchronisiert und auf die horizontale Ebene der virtuellen 3D-Szene gerichtet ist;
wobei das Bestimmen des Grundsegmentierungsergebnisses durch Abbilden des anfänglichen Segmentierungsergebnisses und der aktuellen Akkumulationskarte auf die voreingestellte virtuelle 3D-Szene, die der 3D-Rendering-Maschine entspricht, durch die vorinstallierte 3D-Rendering-Maschine umfasst:
Bewegen (S41) des ersten Ebenenmodells, des zweiten Ebenenmodells und der Kartenkamera, um sie vertikal an der Hauptkamera auszurichten;
Bestimmen (S42) einer ersten Draufsichtkarte der aktuellen Akkumulationskarte;
Erhalten (S43) einer zweiten Draufsichtkarte des anfänglichen Segmentierungsergebnisses durch Rendern des ersten Ebenenmodells basierend auf dem anfänglichen Segmentierungsergebnis und der ersten Draufsichtkarte; und
Bestimmen (S44) des Grundsegmentierungsergebnisses durch Rendern des zweiten Ebenenmodells auf der Grundlage des anfänglichen Segmentierungsergebnisses und der zweiten Draufsichtkarte;
wobei die erste Draufsichtkarte und die zweite Draufsichtkarte in einem zweiten Kamerakoordinatensystem liegen, das der Kartenkamera entspricht.

2. Das Verfahren nach Anspruch 1, wobei das Erhalten (S43) der zweiten Draufsichtkarte umfasst:
Erfassen (S61) von Universalkoordinaten des ursprünglichen Segmentierungsergebnisses;
Berechnen (S62) von ersten Koordinaten der Universalkoordinaten in der ersten Draufsichtkarte und von zweiten Koordinaten der Universalkoordinaten im ersten Kamerakoordinatensystem;
Bestimmen (S63) einer ersten Wahrscheinlichkeit und eines Countdowns eines ersten Pixels, das den ersten Koordinaten entspricht, durch Abtasten der aktuellen Akkumulationskarte, wobei der Countdown die Anzahl von Frames mit dem ersten Pixel und der ersten Wahrscheinlichkeit ist;
Bestimmen (S64) einer zweiten Wahrscheinlichkeit eines zweiten Pixels, das den zweiten Koordinaten entspricht, basierend auf dem anfänglichen Segmentierungsergebnis;
Bestimmen (S65) einer Zielwahrscheinlichkeit basierend auf der ersten Wahrscheinlichkeit und der zweiten Wahrscheinlichkeit; und
Erhalten (S66) der zweiten Draufsichtkarte des anfänglichen Segmentierungsergebnisses in dem zweiten Kamerakoordinatensystem.

3. Das Verfahren nach Anspruch 2 ferner umfassend:
Bestimmen, dass die Zielwahrscheinlichkeit das Maximum der ersten Wahrscheinlichkeit und der zweiten Wahrscheinlichkeit ist, in Reaktion darauf, dass der Countdown größer als Null ist; und
Feststellen, dass die Zielwahrscheinlichkeit die zweite Wahrscheinlichkeit ist, als Reaktion darauf, dass der Countdown gleich Null ist.

4. Das Verfahren nach Anspruch 2, wobei das Bestimmen (S23) des Grundsegmentierungsergebnisses umfasst:
Bestimmen (S71) einer dritten Wahrscheinlichkeit für das zweite Pixel;
Bestimmen (S72) dritter Koordinaten, wobei die dritten Koordinaten Koordinatenwerte eines dritten Pixels sind, das den Universalkoordinaten in der zweiten Draufsichtkarte entspricht;
Bestimmen (S73) einer vierten Wahrscheinlichkeit, und Bestimmen einer endgültigen Wahrscheinlichkeit, die das Maximum aus der dritten Wahrscheinlichkeit und der vierten Wahrscheinlichkeit ist, in Reaktion darauf, dass die dritten Koordinaten in einem vorgegebenen Bereich liegen;
Bestimmen (S74), dass die endgültige Wahrscheinlichkeit die dritte Wahrscheinlichkeit ist, als Reaktion darauf, dass die dritten Koordinaten nicht in dem voreingestellten Bereich liegen; und
Bestimmung (S75) des Grundsegmentierungsergebnisses auf Grundlage der endgültigen Wahrscheinlichkeit.

5. Eine Vorrichtung zur Segmentierung eines Bildes umfassend:
ein Bilderfassungsmodul (810), das für die Erfassung des Bildes konfiguriert ist;
ein anfängliches Segmentierungsmodul (820), das so konfiguriert ist, dass es ein anfängliches Segmentierungsergebnis durch Segmentieren einer Zielgrundregion des Bildes erhält; und
ein Endsegmentierungsmodul (830), das so konfiguriert ist, dass es ein Grundsegmentierungsergebnis des Bildes auf der Grundlage des anfänglichen Segmentierungsergebnisses und einer aktuellen Akkumulationskarte bestimmt,
wobei die aktuelle Akkumulationskarte ein Grundsegmentierungsergebnis eines früheren Bildes umfasst;
**dadurch gekennzeichnet, dass** das Endsegmentierungsmodul (830) ferner so konfiguriert ist, dass es das Grundsegmentierungsergebnis bestimmt, indem es durch eine vorinstallierte 3D-Rendering-Engine das anfängliche Segmentierungsergebnis und die aktuelle Akkumulationskarte auf eine voreingestellte virtuelle 3D-Szene abbildet, die der 3D-Rendering-Engine entspricht; wobei die virtuelle 3D-Szene umfasst: eine Hauptkamera, eine Abbildungskamera, ein erstes Ebenenmodell und ein zweites Ebenenmodell; wobei das erste Ebenenmodell und das zweite Ebenenmodell horizontal angeordnet sind; die Hauptkamera so konfiguriert ist, dass sie das zweite Ebenenmodell abbildet und einem ersten Kamerakoordinatensystem entspricht; und die Abbildungskamera so konfiguriert ist, dass sie das erste Ebenenmodell abbildet, wobei die Abbildungskamera mit der Hauptkamera synchronisiert und auf die horizontale Ebene der virtuellen 3D-Szene gerichtet ist;
wobei das Endsegmentierungsmodul (830) umfasst:
ein Elementbewegungsuntermodul, das so konfiguriert ist, dass es das erste Ebenenmodell, das zweite Ebenenmodell und die Kartenkamera so bewegt, dass sie sich vertikal an der Hauptkamera ausrichten;
ein Umwandlungsuntermodul für die aktuelle Karte, das so konfiguriert ist, dass es eine erste Karte der Draufsicht der aktuellen Akkumulationskarte bestimmt;
ein erstes Rendering-Untermodul, das so konfiguriert ist, dass es eine zweite Draufsichtkarte des anfänglichen Segmentierungsergebnisses durch Rendering des ersten Ebenenmodells auf der Grundlage des anfänglichen Segmentierungsergebnisses und der ersten Draufsichtkarte erhält; und
ein zweites Rendering-Untermodul, das so konfiguriert ist, dass es das Grundsegmentierungsergebnis durch Rendering des zweiten Ebenenmodells auf der Grundlage des anfänglichen Segmentierungsergebnisses und der zweiten Draufsichtkarte bestimmt;
wobei die erste Draufsichtkarte und die zweite Draufsichtkarte in einem zweiten Kamerakoordinatensystem liegen, das der Kartenkamera entspricht.

6. Die Vorrichtung nach Anspruch 5, wobei das erste Rendering-Untermodul ferner dazu konfiguriert ist:
die Universalkoordinaten des anfänglichen Segmentierungsergebnisses zu ermitteln;
erste Koordinaten der Universalkoordinaten in der ersten Draufsichtkarte und zweiter Koordinaten der Universalkoordinaten im ersten Kamerakoordinatensystem zu berechnen;
eine erste Wahrscheinlichkeit und einen Countdowns eines ersten Pixels, das den ersten Koordinaten entspricht, durch Abtasten der aktuellen Akkumulationskarte zu bestimmen, wobei der Countdown die Anzahl von Frames mit dem ersten Pixel und der ersten Wahrscheinlichkeit ist;
eine zweite Wahrscheinlichkeit eines zweiten Pixels zu bestimmen, das den zweiten Koordinaten entspricht, basierend auf dem anfänglichen Segmentierungsergebnis;
eine Zielwahrscheinlichkeit auf der Grundlage der ersten Wahrscheinlichkeit und der zweiten Wahrscheinlichkeit zu bestimmen; und
die zweite Draufsichtkarte des anfänglichen Segmentierungsergebnisses im zweiten Kamerakoordinatensystem zu erhalten.

7. Die Vorrichtung nach Anspruch 6, wobei das erste Rendering-Untermodul ferner dazu konfiguriert ist:
zu bestimmen, dass die Zielwahrscheinlichkeit das Maximum der ersten Wahrscheinlichkeit und der zweiten Wahrscheinlichkeit ist, in Reaktion darauf, dass der Countdown größer als Null ist; und
festzustellen, dass die Zielwahrscheinlichkeit die zweite Wahrscheinlichkeit ist, woraufhin der Countdown gleich Null ist.

8. Die Vorrichtung nach Anspruch 6, wobei das zweite Rendering-Submodul ferner dazu konfiguriert ist:
eine dritte Wahrscheinlichkeit für das zweite Pixel zu bestimmen;
dritte Koordinaten zu bestimmen, wobei die dritten Koordinaten Koordinatenwerte eines dritten Pixels sind, das den Universalkoordinaten in der zweiten Draufsichtkarte entspricht;
eine vierte Wahrscheinlichkeit zu bestimmen, und eine endgültige Wahrscheinlichkeit zu bestimmen, die das Maximum aus der dritten Wahrscheinlichkeit und der vierten Wahrscheinlichkeit ist, als Reaktion darauf, dass die dritten Koordinaten in einem vorbestimmten Bereich liegen;
zu bestimmen, dass die endgültige Wahrscheinlichkeit die dritte Wahrscheinlichkeit ist, als Reaktion darauf, dass die dritten Koordinaten nicht in dem voreingestellten Bereich liegen; und
das Ergebnis der Grundsegmentierung auf der Grundlage der endgültigen Wahrscheinlichkeit zu bestimmen.

9. Ein Nicht-transitorisches, computerlesbares Speichermedium, **dadurch gekennzeichnet, dass**, wenn Anweisungen in dem Speichermedium von einem Prozessor eines elektronischen Geräts ausgeführt werden, das elektronische Gerät das Verfahren nach einem der Ansprüche 1-4 ausführt.

## Revendications

1. Procédé mis en œuvre par ordinateur pour segmenter une image, appliqué à un équipement électronique, et comprenant
l'acquisition (S21) de l'image ;
l'obtention (S22) d'un résultat de segmentation initiale en segmentant une région de sol cible de l'image ; et
la détermination (S23) d'un résultat de segmentation du sol de l'image sur la base du résultat de segmentation initiale et d'une carte d'accumulation actuelle,
dans lequel la carte d'accumulation actuelle comprend un résultat de segmentation du sol d'une image précédente ;
**caractérisé en ce que** la détermination (S23) du résultat de segmentation du sol de l'image sur la base du résultat de segmentation initiale et de la carte d'accumulation actuelle comprend :
la détermination du résultat de segmentation du sol en mappant, au moyen d'un moteur de rendu 3D préinstallé, le résultat de segmentation initiale et la carte d'accumulation actuelle sur une scène virtuelle 3D prédéfinie correspondant au moteur de rendu 3D ; dans lequel la scène virtuelle 3D comprend : une caméra principale, une caméra cartographique, un premier modèle plan et un second modèle plan ; dans lequel le premier modèle plan et le second modèle plan sont placés horizontalement ; la caméra principale est configurée pour rendre le second modèle plan, et correspond à un premier système de coordonnées de caméra ; et la caméra cartographique est configurée pour rendre le premier modèle plan, dans lequel la caméra cartographique est synchronisée avec la caméra principale et dirigée vers le plan horizontal de la scène virtuelle 3D ;
dans lequel la détermination du résultat de segmentation du sol en mappant, par le moteur de rendu 3D préinstallé, le résultat de segmentation initiale et la carte d'accumulation actuelle sur la scène virtuelle 3D prédéfinie correspondant au moteur de rendu 3D, comprend :
le déplacement (S41) du premier modèle plan, du second modèle plan et de la caméra cartographique pour les aligner verticalement avec la caméra principale ;
la détermination (S42) d'une première carte de vue de dessus de la carte d'accumulation actuelle ;
l'obtention (S43) d'une seconde carte de vue de dessus du résultat de segmentation initiale en rendant le premier modèle plan sur la base du résultat de segmentation initiale et de la première carte de vue de dessus ; et
la détermination (S44) du résultat de segmentation du sol en rendant le second modèle plan sur la base du résultat de segmentation initiale et de la seconde carte de vue de dessus ;
dans lequel la première carte de vue de dessus et la seconde carte de vue de dessus sont dans un second système de coordonnées de caméra correspondant à la caméra cartographique.

2. Procédé selon la revendication 1, dans lequel ladite obtention (S43) de la seconde carte de vue de dessus comprend :
l'acquisition (S61) de coordonnées universelles du résultat de segmentation initiale ;
le calcul (S62) de premières coordonnées des coordonnées universelles dans la première carte de vue de dessus et de secondes coordonnées des coordonnées universelles dans le premier système de coordonnées de caméra ;
la détermination (S63) d'une première probabilité et d'un compte à rebours d'un premier pixel correspondant aux premières coordonnées par échantillonnage de la carte d'accumulation actuelle, dans lequel le compte à rebours est le nombre de trames avec le premier pixel et la première probabilité ;
la détermination (S64) d'une deuxième probabilité d'un second pixel correspondant aux secondes coordonnées sur la base du résultat de segmentation initiale ;
la détermination (S65) d'une probabilité cible sur la base de la première probabilité et de la deuxième probabilité ; et
l'obtention (S66) de la seconde carte de vue de dessus du résultat de segmentation initiale dans le second système de coordonnées de caméra.

3. Procédé selon la revendication 2, comprenant en outre :
la détermination que la probabilité cible est le maximum de la première probabilité et de la deuxième probabilité, en réponse au fait que le compte à rebours est supérieur à zéro ; et
la détermination que la probabilité cible est la deuxième probabilité, en réponse au fait que le compte à rebours est égal à zéro.

4. Procédé selon la revendication 2, dans lequel ladite détermination (S23) du résultat de segmentation du sol comprend :
la détermination (S71) d'une troisième probabilité du second pixel ;
la détermination (S72) de troisièmes coordonnées, dans lequel les troisièmes coordonnées sont des valeurs de coordonnées d'un troisième pixel correspondant aux coordonnées universelles dans la seconde carte de vue de dessus ;
la détermination (S73) d'une quatrième probabilité, et la détermination d'une probabilité finale qui est le maximum de la troisième probabilité et de la quatrième probabilité, en réponse au fait que les troisièmes coordonnées sont dans une plage prédéfinie ;
la détermination (S74) que la probabilité finale est la troisième probabilité, en réponse au fait que les troisièmes coordonnées ne sont pas dans la plage prédéfinie ; et
la détermination (S75) du résultat de segmentation du sol sur la base de la probabilité finale.

5. Dispositif de segmentation d'une image, comprenant :
un module d'acquisition d'image (810) configuré pour acquérir l'image ;
un module de segmentation initiale (820) configuré pour obtenir un résultat de segmentation initiale en segmentant une région de sol cible de l'image ; et
un module de segmentation finale (830) configuré pour déterminer un résultat de segmentation du sol de l'image sur la base du résultat de segmentation initiale et d'une carte d'accumulation actuelle,
dans lequel la carte d'accumulation actuelle comprend un résultat de segmentation du sol d'une image précédente ;
**caractérisé en ce que** le module de segmentation finale (830) est en outre configuré pour déterminer le résultat de segmentation du sol en mappant, au moyen d'un moteur de rendu 3D préinstallé, le résultat de segmentation initiale et la carte d'accumulation actuelle sur une scène virtuelle 3D prédéfinie correspondant au moteur de rendu 3D ; dans lequel la scène virtuelle 3D comprend : une caméra principale, une caméra cartographique, un premier modèle plan et un second modèle plan ; dans lequel le premier modèle plan et le second modèle plan sont placés horizontalement ; la caméra principale est configurée pour rendre le second modèle plan, et correspond à un premier système de coordonnées de caméra ; et la caméra cartographique est configurée pour rendre le premier modèle plan, dans lequel la caméra cartographique est synchronisée avec la caméra principale et dirigée vers le plan horizontal de la scène virtuelle 3D ;
dans lequel le module de segmentation finale (830) comprend :
un sous-module de mouvement d'élément configuré pour déplacer le premier modèle plan, le second modèle plan et la caméra cartographique afin de les aligner verticalement avec la caméra principale ;
un sous-module de conversion de carte actuelle configuré pour déterminer une première carte de vue de dessus de la carte d'accumulation actuelle ;
un premier sous-module de rendu configuré pour obtenir une seconde carte de vue de dessus du résultat de segmentation initiale en rendant le premier modèle plan sur la base du résultat de segmentation initiale et de la première carte de vue de dessus ; et
un second sous-module de rendu configuré pour déterminer le résultat de segmentation du sol en rendant le second modèle plan sur la base du résultat de segmentation initiale et de la seconde carte de vue de dessus ;
dans lequel la première carte de vue de dessus et la seconde carte de vue de dessus sont dans un second système de coordonnées de caméra correspondant à la caméra cartographique.

6. Dispositif selon la revendication 5, dans lequel le premier sous-module de rendu est en outre configuré pour :
acquérir des coordonnées universelles du résultat de segmentation initiale ;
calculer de premières coordonnées des coordonnées universelles dans la première carte de vue de dessus et de secondes coordonnées des coordonnées universelles dans le premier système de coordonnées de caméra ;
déterminer une première probabilité et un compte à rebours d'un premier pixel correspondant aux premières coordonnées par échantillonnage de la carte d'accumulation actuelle, dans lequel le compte à rebours est le nombre de trames avec le premier pixel et la première probabilité ;
déterminer une deuxième probabilité d'un second pixel correspondant aux secondes coordonnées sur la base du résultat de segmentation initial ;
déterminer une probabilité cible sur la base de la première probabilité et de la deuxième probabilité ; et
obtenir la seconde carte de vue de dessus du résultat de segmentation initiale dans le second système de coordonnées de caméra.

7. Dispositif selon la revendication 6, dans lequel le premier sous-module de rendu est en outre configuré pour :
déterminer que la probabilité cible est le maximum de la première probabilité et de la deuxième probabilité, en réponse au fait que le compte à rebours est supérieur à zéro ; et
déterminer que la probabilité cible est la deuxième probabilité, en réponse au fait que le compte à rebours est égal à zéro.

8. Dispositif selon la revendication 6, dans lequel le second sous-module de rendu est en outre configuré pour :
déterminer une troisième probabilité du second pixel ;
déterminer de troisièmes coordonnées, dans lequel les troisièmes coordonnées sont des valeurs de coordonnées d'un troisième pixel correspondant aux coordonnées universelles dans la seconde carte de vue de dessus ;
déterminer une quatrième probabilité, et déterminer une probabilité finale qui est le maximum de la troisième probabilité et de la quatrième probabilité, en réponse au fait que les troisièmes coordonnées sont dans une plage prédéfinie ;
déterminer que la probabilité finale est la troisième probabilité, en réponse au fait que les troisièmes coordonnées ne sont pas dans la plage prédéfinie ; et
déterminer le résultat de segmentation du sol sur la base de la probabilité finale.

9. Support de stockage non transitoire lisible par ordinateur, **caractérisé en ce que**, lorsque des instructions dans le support de stockage sont exécutées par un processeur d'un équipement électronique, l'équipement électronique exécute le procédé selon l'une quelconque des revendications 1 à 4.
